# FASCICULE DE BREVET EUROPEEN

(11) **EP 1 183 296 B1**
(45) Date de publication et mention de la délivrance du brevet: **28.04.2004**
(21) Numéro de dépôt: 00938883.6
(22) Date de dépôt: 05.06.2000
(51) Int. Cl.: C08G 18/83, C08G 18/08, C08G 18/28

(54) **PROCEDE DE FABRICATION D'UN POLYURETHANNE THERMODURCISSABLE A PARTIR D'UN POLYURETHANNE THERMOPLASTIQUE ET POLYURETHANNE THERMODURCI SUSCEPTIBLE D'ETRE OBTENU PAR LEDIT PROCEDE**
VERFAHREN ZUR HERSTELLUNG EINES HITZEHÄRTBAREN POLYURETHANS AUSGEHEND VON EINEM THERMOPLASTISCHEN POLYURETHAN UND HITZEGEHÄRTETES POLYURETHAN, DAS MITTELS DIESEM VERFAHREN HERGESTELLT WERDEN KANN
METHOD FOR PRODUCING THERMOSETTING POLYURETHANE FROM THERMOPLASTIC POLYURETHANE AND THERMOSET POLYURETHANE OBTAINED USING SAID METHOD

(30) Priorité: 08.06.1999 FR 9907454
(43) Date de publication de la demande: 06.03.2002
(73) Titulaire: Noveon IP Holdings Corp., Cleveland, OH 44141-3247 (US)
(72) Inventeur: LAGNEAUX, Didier, F-38460 Chozeau (FR); DASSIN, Stéphane, F-69330 Meyzieu (FR); DUMON, Michel, F-69100 Villeurbanne (FR); MECHIN, Françoise, F-69006 Lyon (FR); PASCAULT, Jean-Pierre, F-69100 Villeurbanne (FR)
(74) Mandataire: Dupuis, François
(86) Numéro de dépôt international: PCT/FR2000/001534
(87) Numéro de publication internationale: WO 2000/075213

(56) Documents cités:
- EP-A- 0 371 370
- EP-A- 0 478 176
- DE-A- 4 115 508
- PATENT ABSTRACTS OF JAPAN vol. 015, no. 282 (C-0850), 17 juillet 1991 (1991-07-17) & JP 03 097750 A (SHOWA ELECTRIC WIRE & CABLE CO LTD), 23 avril 1991 (1991-04-23)

## Description

L'invention se rapporte à un procédé de fabrication d'un polyuréthanne thermodurcissable après transformation, à partir d'un polyuréthanne thermoplastique.

Différentes matières thermoplastiques sont mises en oeuvre pour l'élaboration de certains produits, tels que tubes de transport de fluides chauds, câbles électriques, roues pleines, joints, silentblocs, semelles de chaussures, etc...

Les matières thermoplastiques sont utilisées dans ces différentes applications notamment pour leur facilité de mise en oeuvre et leur qualité à température ambiante, souplesse et résistance mécanique. Toutefois, ces matières présentent l'inconvénient d'être peu résistantes physiquement à la chaleur, de sorte que les produits obtenus à partir de ces matières, en fonction de leurs utilisation, présentent une longévité moindre.

Au contraire, les matières dites thermodurcissables, si elles sont effectivement résistantes à la chaleur, restent difficiles à façonner, de sorte que leur emploi est limité.

Au regard de ces différents problèmes, l'objectif a donc été de développer des matières présentant les caractéristiques physiques et la facilité de transformation des matières thermoplastiques dotées des caractéristiques thermomécaniques des matières thermodurcissables, et notamment leur résistance à la température.

Pour ce faire, on a proposé de préparer un polymère thermodurcissable en modifiant des polymères thermoplastiques facilement transformables pour leur permettre de se réticuler après transformation en produit fini.

Pour parvenir à cet objectif, un premier procédé consiste à mélanger et extruder un polymère, et notamment un polyéthylène avec un peroxyde. Toutefois, un tel procédé présente l'inconvénient non seulement d'être réalisable à partir d'un nombre limité de polyéthylène, mais également requiert des installations industrielles très onéreuses.

Un autre procédé consiste à irradier à des doses d'exposition de 80 à 200 K gray un polymère. Toutefois, on note, outre le fait que ce type de traitement est très coûteux, qu'il tend à détruire plutôt qu'à améliorer les polymères mis en oeuvre.

Un autre procédé, plus particulièrement décrit dans les documents US-A-3 648 155 et US-A-4 117 195, consiste à greffer un organo-silane hydrolysable comprenant au moins une chaîne insaturée du type vinylique en présence d'un initiateur de greffage des fonctions vinyliques, et notamment le peroxyde, et d'un catalyseur de polycondensation des fonctions silanes. L'hydrolyse et la polycondensation des fonctions silanes permettent la réticulation du polymère pour obtenir la forme thermodurcie.

Cependant, tous les procédés ci-avant décrits ne conduisent à des résultats satisfaisants que sur des matières à base de polyéthylène, leur mélange, leurs copolymères ou terpolymères, telles que celles décrites par exemple dans le document FR-A-2 546 172.

Cependant, les performances du polyéthylène et de ses dérivés ne sont pas toujours satisfaisantes en fonction des applications envisagées : tenue thermique plus faible, résistance à l'abrasion plus faible, souplesse plus faible, etc...

On préfère aux polyéthylènes, les polymères du type polyuréthanne thermoplastiques (TPU), lesquels présentent des caractéristiques mécaniques très satisfaisantes en fonction des applications envisagées. Toutefois, tous les TPU usuels connus perdent leurs caractéristiques mécaniques à une température d'environ 70°C. Peuvent être également utilisés les polyuréthannes thermodurcissables lesquels restent toutefois très difficiles à travailler.

Le problème posé est donc de développer un procédé de fabrication de polyuréthanne conservant les conditions de transformation des polyuréthannes thermoplastiques (TPU) tout en gardant les principales caractéristiques mécaniques et en rajoutant des tenues thermiques améliorées supérieures à la tenue thermique des polyéthylènes réticulés.

Pour ce faire, le Demandeur a proposé un procédé consistant à greffer un organosilane hydrolysable comprenant au moins une chaîne aminée primaire (-NH₂) ou secondaire (=NH) directement sur un polyuréthanne thermoplastique. Cependant, lors du procédé de transformation en température, la réaction avec l'amine entraîne une rupture des chaînes macromoléculaires principales. Les silanes se greffent à chacune des extrémités des différents fragments selon le schéma réactionnel suivant :

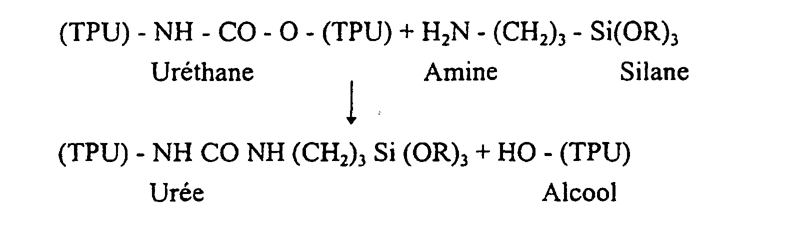

On obtient non seulement un TPU greffé de faible poids moléculaire, mais surtout un TPU présentant une résistance thermomécanique faible.

Face à cet inconvénient, le problème était donc de proposer un nouveau procédé permettant de greffer des organo-silanes sur des chaînes macromoléculaires de polyuréthanne thermoplastique, sans conduire à la dégradation desdites chaînes.

Pour ce faire, l'invention propose un procédé de fabrication d'un polyuréthanne thermodurcissable après transformation, à partir d'un polyuréthanne thermoplastique selon lequel :
- on fait réagir à une température comprise entre 120 et 220°C un mélange de polyuréthanne thermoplastique et d'agent liant comprenant au moins deux fonctions isocyanate de sorte à obtenir un TPU réactif ;
- on met ensuite en contact le mélange TPU réactif avec un organo-silane hydrolysable ;
- on récupère enfin le TPU greffé obtenu,
l'organo-silane hydrolysable ayant la formule générale : 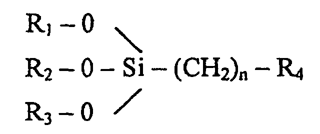 avec R₁, R₂, R₃ = alkyl aliphatique, alkyl aromatique ; n ≥ 1 ; R₄ étant un radical organique susceptible de réagir avec ledit agent liant.

Dans une forme de réalisation préférée, R₄ est choisi dans le groupe comprenant les radicaux NH₂, NH, SH, OH, phénol, epoxy. Cependant, cette liste n'est pas limitative et R₄ s'entend pour tout radical organique susceptible de réagir avec une fonction isocyanate.

Avantageusement, l'agent de liaison est un diisocyanate de formule générale:

O = C = N - R₅ - N = C = O,

avec R₅ = radical organique

Le Demandeur a en effet constaté que de façon surprenante, la double sélection de molécules du type organosilane avec R₄ = NH₂, NH, SH, OH, phénol, époxy et de molécules du type isocyanate de fonctionnalité supérieure ou égale à 2, permettait de greffer efficacement les organo-silanes aux chaînes macromoléculaires de polyuréthanne thermoplastique, sans dégrader ces dernières.

Le procédé de l'invention présente un autre avantage qui est celui de pouvoir s'adapter à tous types de TPU parmi lesquels les esters, les éthers, les carbonates et les caprolactones.

De même, le TPU choisi peut être soit aliphatique soit aromatique.

Enfin, il peut se présenter sous forme amorphe ou semi-cristalline.

Dans une forme avantageuse de réalisation de l'invention, l'organo-silane est l'aminopropyltrimethoxysilane, de formule :

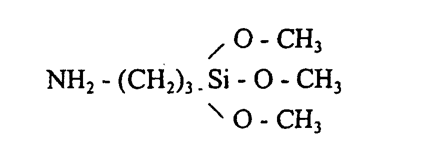

Dans ce cas, des réactions entre des liaisons uréthane du TPU et des fonctions isocyanates conduisent à la formation d'allophanates et de façon simultanée ou légèrement décalée dans le temps, en fonction du procédé de mélangeage, des réactions isocyanates-amine suivant le schéma réactionnel suivant :

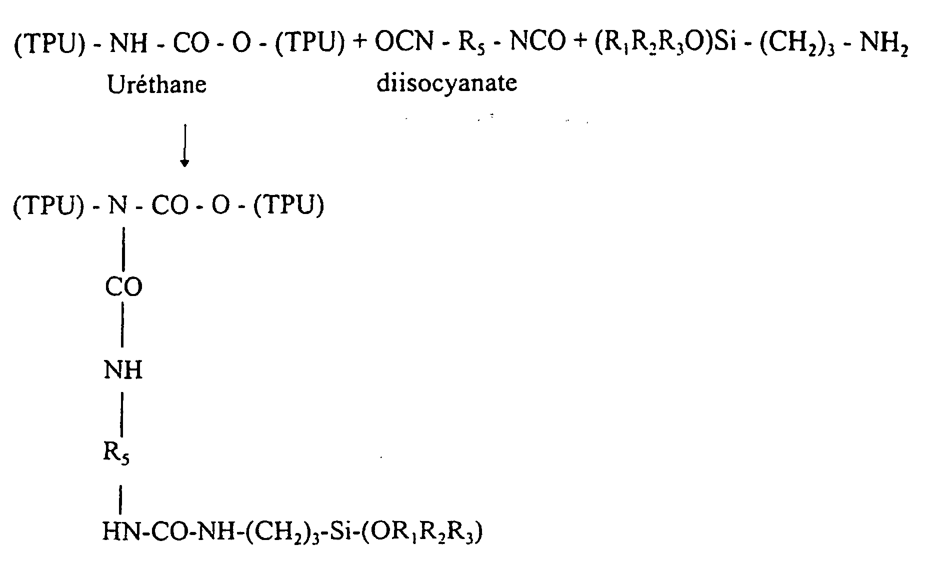

Cette succession de réactions permet de fixer les groupements silanes hydrolysables sur la chaîne TPU sans la dégrader. Le fait de greffer plusieurs silanes sur une même chaîne TPU peut favoriser par ailleurs la réticulation ultérieure.

Après transformation, le polyuréthanne thermoplastique obtenu s'auto-réticule à l'humidité par hydrolyse et polycondensation des fonctions silanes greffées sur les différentes chaînes macro-moléculaires du TPU (réaction classique d'hydrolyse et de condensation des silanes).

En tant que diisocyanate, on peut avantageusement utiliser un diisocyanate aromatique, cycloaliphatique, aliphatique ou leurs dimères.

Parmi les diisocyanates aromatiques, on choisit avantageusement le TDI (1-3 diisocyanatométhylbenzène), le 2,4'-MDI (1 isocyanato-2(4-isocyanatophényl) méthyl-benzène), le 4,4' MDI (1,1-méthylène bis (4-isocyanatobenzène)), le 2,4-TDI (2,4 di-isocyanato-1-méthylbenzène) et le PPDI (1,4-diisocyanatobenzène) ou leurs dimères.

Parmi les diisocyanates cycloaliphatiques, on choisit avantageusement le H₁₂ MDI (1,1-méthylène bis (4-isocyanatocyclohexane)). Bien entendu, la liste des diisocyanates ci-dessus susceptibles d'être mis en oeuvre dans le procédé de l'invention n'est pas exhaustive. On peut également mettre en oeuvre le HDI (1,6-diisocyanatohexane), le CHDI (trans-1,4-diisocyanatocyclohexane), le IPDI (5-isocyanato-1-(isocyanatométhyl)-1,3,3-triméthylcyclohexane), le TMDI (1,6-diisocyanato-2,2,4 (ou 2,4,4)-triméthylhexane), le m-TMXDI (1,3-bis (1-isocyanato-1-méthyléthylbenzene), le p-TMXDI (1,4-bis (1- isocyanato-1-méthyléthylbenzene), le NDI (1,5-diisocyanatonaphthalene), le MDI polymérique (acide isocyanique, polyméthylène polyphénylène ester), le Desmodur R (1,1',1"-méthyllidynetris (4-isocyanatobenzene)), le Desmodur RI (4-isocyanatophenol phosphorothioate (3:1) ester).

Selon une autre caractéristique de l'invention, la concentration en agent de liaison nécessaire à la fabrication du TPU est comprise entre 0,1 et 30 % en poids de TPU, avantageusement entre 3 et 4 % en poids.

Pour une concentration inférieure à 1 % en poids de TPU, la quantité d'agent de liaison est insuffisante pour éviter les coupures de chaînes principales du TPU. Il en résulte une perte des propriétés thermomécaniques du polymère réticulé.

Pour une concentration supérieure à 30 %, les résultats obtenus ne sont pas meilleurs, de sorte que le procédé devient économiquement moins intéressant.

Parallèlement, la concentration d'organo-silane nécessaire pour obtenir un polyuréthane thermodurcissable après transformation est comprise entre 0,05 et 15% en poids de TPU, avantageusement 2 %.

Pour une concentration inférieure à 0,5 % en poids, la densité du maillage n'est pas suffisante pour obtenir un produit insoluble.

Pour une concentration supérieure à 15 % en poids, le prix des constituants devient économiquement moins intéressant.

Le polyuréthanne thermoplastique obtenu par le procédé de l'invention peut être ensuite soit granulé, soit transformé de sorte à obtenir des profilés de forme déterminée.

Ce type de réaction peut se faire en une ou deux étapes, dans différents réacteurs du type extrudeuse, calandreuse, cuve mélangeuse, etc...

Lorsque le procédé de l'invention est effectué par extrusion, on utilise en tant qu'extrudeuse une machine mono ou bi-vis, dont le profil est facilement adaptable à chaque TPU transforme. Dans ce cas, l'extrudeuse comporte au moins deux zones de malaxage et au moins trois zones de température.

La température maximum imposée lors du procédé d'extrusion est comprise entre 120 et 220° C selon la nature du TPU. Ce dernier est introduit avec la molécule comprenant au moins une fonction isocyanate, puis l'organosilane hydrolysable est introduit dans une zone située entre 0 et 0,5 fois la longueur totale de la vis.

Comme déjà dit, le mélange à extruder est granulé en sortie d'extrudeuse ou directement transformé de façon à obtenir des profilés de forme déterminée. Dans le cas de granulés, le procédé présente l'avantage de fournir des semi-produits qui sont à nouveau utilisables dans un autre procédé de transformation, tel que l'extrusion, le calandrage, l'injection, etc ...

Comme déjà dit, le semi-produit des TPU thermodurcissable après transformation peut être obtenu aussi par calandrage ou passage dans un malaxeur interne du type Brabender ou toute autre machine de transformation qui assure un cisaillement de la matière entre 120 et 220° C.

Bien entendu, l'invention se rapporte également au polyuréthanne thermodurcissable après transformation, susceptible d'être obtenu par le procédé ci-avant décrit.

L'invention et les avantages qui en découlent ressortiront mieux des exemples de réalisation suivants.

La figure 1 est une analyse chromatographique de TPU greffé selon l'exemple 1.

La figure 2 représente l'évolution du point Vicat après réticulation en fonction du pourcentage d'agent de liaison et de l'organo-silane.

### Exemple 1

On introduit en pied de trémie d'une extrudeuse bi-vis du TPU commercialisé par GOODRICH sous la marque ESTANE 58201 et 4 pcr de diTDI (dimère du toluène diisocyanate), (c'est-à-dire 4 % en masse de diTDI). A un tiers de la longueur totale de la vis, on introduit 2,2 pcr de méthylaminopropyl méthoxysilane à des températures de 170 à 180° C.

Le produit obtenu est stocké à l'air ambiant pendant une quinzaine de jours.

On introduit la matière dans un solvant du TPU et on constate que plus de 85 % de la matière est insoluble, ce qui prouve que la réticulation a bien eu lieu et donc que le greffage a été efficace.

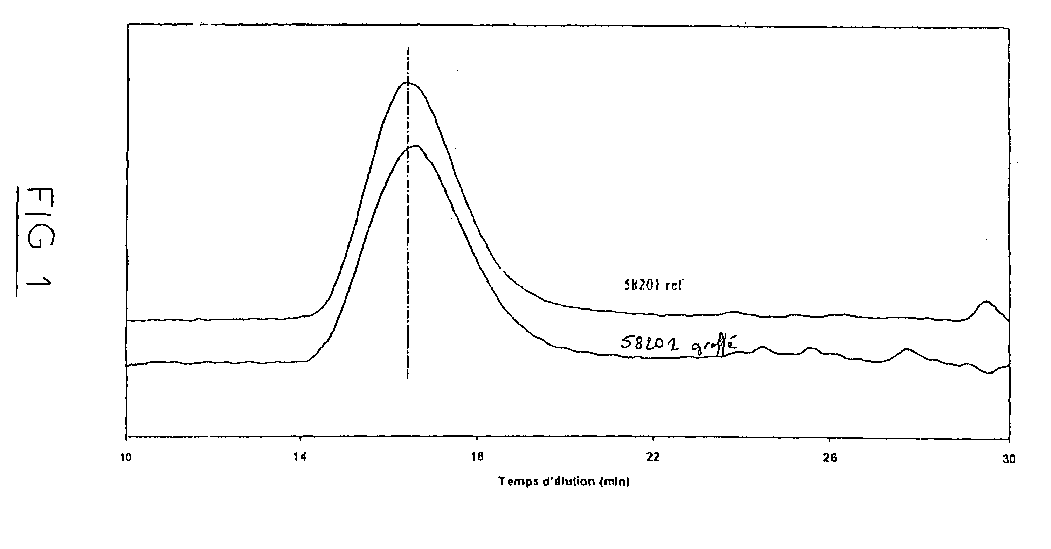

D'autre part, l'analyse chromatographique de la figure 1 montre qu'il n'y a pas de différence notoire des masses molaires entre le TPU de base et le TPU greffé, ce qui prouve que les chaînes de TPU ne sont pas dégradées.

### Exemple 2

Dans une extrudeuse mono-vis de 40 mm de diamètre et de 22 D de longueur, on introduit 3 pcr de MDI dans le TPU commercialisé par GOODRICH sous la marque ESTANE 58277 à 170° C. On obtient des granulés.

On réintroduit ces granulés dans la même extrudeuse en présence de 2 pcr de γ-APS (méthoxysilane) à une température de 170° C (ces deux opérations peuvent se faire en une seule étape si l'extrudeuse est dotée d'un système d'incorporation après la trémie).

### Exemple 3

On introduit dans une calandrette portée à 120°C le TPU commercialisé par GOODRICH sous la marque ESTANE 5715, on le fait fondre, puis on introduit après 20 secondes 4 pcr de diTDI, puis 30 secondes après, 2,2 pcr de M-APS (méthoxysilane). On refroidit la masse fondue.

Dans les exemples 2 et 3, après quelques jours d'exposition à l'humidité, on vérifie que plus de 80 % de la masse des matières était à chaque fois insoluble et que le point Vicat initial de chaque matière se trouvait augmenté de 40° C.

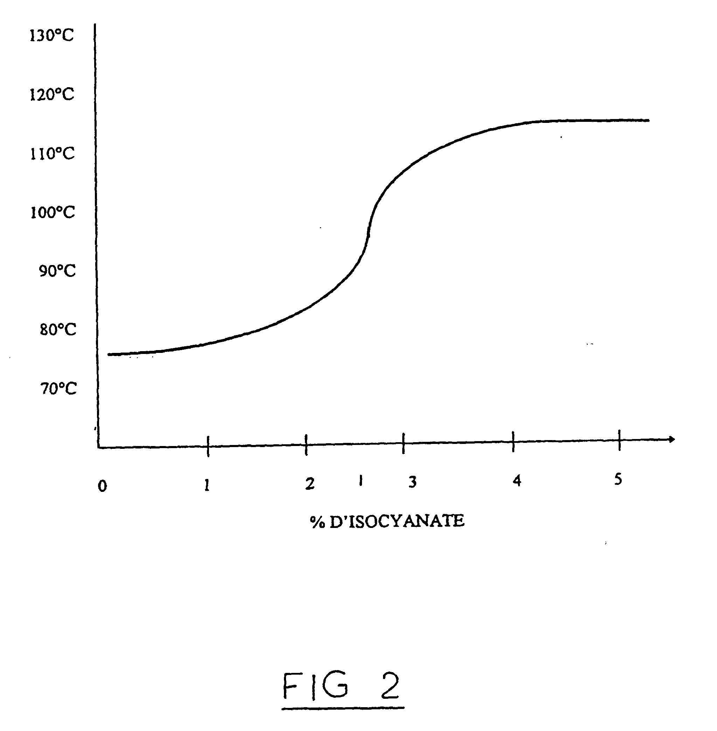

La figure 2, reproduisant l'évolution du point Vicat en fonction du pourcentage de d'isocyanate (rapport molaire [organo-silane/di-isocyanate] = 1), montre que pour une concentration de di-isocyanate supérieure à 4 %, le point Vicat de la matière d'origine est augmenté de 40° C.

Ce procédé permet de conserver les caractéristiques mécaniques du polymère de base à des températures supérieures de 40° C.

L'invention et les avantages qui en découlent ressortent bien de la description.

On notera en particulier la simplicité du procédé par le fait qu'il ne nécessite pas d'étapes ultérieures après transformation du polyuréthanne thermoplastique pour obtenir la réticulation du produit fini.

## Revendications

1. Procédé de fabrication d'un polyuréthanne thermodurcissable après transformation, à partir d'un polyuréthanne thermoplastique (TPU) selon lequel :
- on fait réagir à une température comprise entre 120 et 220°C un mélange de polyuréthanne thermoplastique et d'agent liant comprenant au moins deux fonctions isocyanate de sorte à obtenir un TPU réactif ;
- on met ensuite en contact le mélange TPU réactif avec un organo-silane hydrolysable ;
- on récupère enfin le TPU greffé obtenu,
l'organo-silane hydrolysable ayant la formule générale : 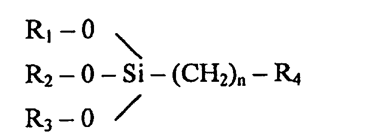 avec R₁, R₂, R₃ = alkyl aliphatique, alkyl aromatique ; n ≥ 1 ; R₄ étant un radical organique susceptible de réagir avec ledit agent liant.

2. Procédé selon la revendication 1, **caractérisé en ce que** R₄ est choisi dans le groupe comprenant les radicaux NH₂, NH, SH, OH, phénol, epoxy.

3. Procédé selon l'une des revendications précédentes, **caractérisé en ce que** l'agent de liaison est un diisocyanate de formule générale :
O = C = N - R₅ - N = C = O,
avec R₅ = radical organique.

4. Procédé selon l'une des revendications précédentes, **caractérisé en ce que** l'organo-silane est l'aminopropyltrimethoxysilane, de formule :

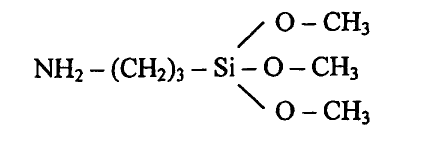

5. Procédé selon l'une des revendications précédentes, **caractérisé en ce que** le diisocyanate est choisi dans le groupe comprenant les diisocyanates aromatiques, cycloaliphatiques, aliphatiques et leurs dimères.

6. Procédé selon la revendication 5, **caractérisé en ce que** le diisocyanate aromatique est choisi dans le groupe comprenant le TDI (1-3 diisocyanatométhylbenzène), le 2,4'-MDI (1 isocyanato-2(4-isocyanatophényl) méthyl-benzène), le 4,4' MDI (1,1-méthylène bis (4-isocyanatobenzène)), le 2,4-TDI (2,4 diisocyanato-1-méthylbenzène) et le PPDI (1,4-diisocyanatobenzène) ou leurs dimères.

7. Procédé selon la revendication 5, **caractérisé en ce que** le diisocyanate cycloaliphatique est le H₁₂ MDI (1,1-méthylène bis (4-isocyanatocyclohexane)).

8. Procédé selon l'une des revendications précédentes, **caractérisé en ce que** la concentration en agent de liaison est comprise entre 0,1 et 30 % en poids du TPU.

9. Procédé selon l'une des revendications précédentes, **caractérisé en ce que** la concentration d'organo-silane est comprise entre 0,05 et 15 % en poids de TPU.

10. Procédé selon l'une des revendications précédentes, **caractérisé en ce que** le polyuréthanne thermoplastique greffé obtenu est ensuite soit granulé, soit directement transformé.

11. Polyuréthanne thermodurcissable après transformation, susceptible d'être obtenu par le procédé objet de l'une des revendications 1 à 10.

## Patentansprüche

1. Verfahren zur Herstellung eines nach Verformung hitzehärtbaren Polyurethans, ausgehend von einem thermoplastischen Polyurethan (TPU), wonach man:
- bei einer Temperatur zwischen 120 und 220 °C ein Gemisch des thermoplastischen Polyurethans mit einem Verknüpfungsmittel, das wenigstens zwei Isocyanat-Funktionen aufweist, reagieren läßt, um ein reaktionsfähiges TPU zu erhalten;
- anschließend das reaktionsfähige TPU-Gemisch mit einem hydrolysierbaren Organosilan in Kontakt bringt;
- schließlich das erhaltene gepfropfte TPU gewinnt,
wobei das hydrolysierbare Organosilan die allgemeine Formel 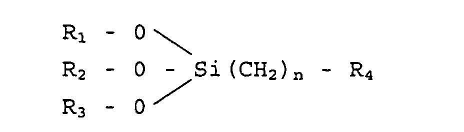 aufweist, worin R₁, R₂, R₃ für aliphatisches Alkyl, aromatisches Alkyl stehen; n ≥ 1 ist; und R₄ einen organischen Rest bedeutet, der zur Reaktion mit dem Verknüpfungsmittel befähigt ist.

2. Verfahren nach Anspruch 1, **dadurch gekennzeichnet, daß** R₄ aus der die Reste NH₂, NH, SH, OH, Phenol, Epoxy umfassenden Gruppe ausgewählt ist.

3. Verfahren nach einem der vorstehenden Ansprüche, **dadurch gekennzeichnet, daß** das Verknüpfungsmittel ein Diisocyanat mit der allgemeinen Formel
O = C = N-R₅-N = C = O
ist, worin R₅ einen organischen Rest darstellt.

4. Verfahren nach einem der vorstehenden Ansprüche, **dadurch gekennzeichnet, daß** das Organosilan das Aminopropyltrimethoxysilan mit der Formel 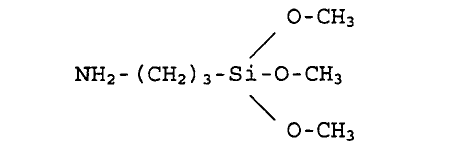 ist.

5. Verfahren nach einem der vorstehenden Ansprüche, **dadurch gekennzeichnet, daß** das Diisocyanat aus der die aromatischen Diisocyanate, cycloaliphatischen Diisocyanate, aliphatischen Diisocyanate und deren Dimere umfassenden Gruppe ausgewählt ist.

6. Verfahren nach Anspruch 5 **dadurch gekennzeichnet, daß** das aromatische Diisocyanat aus der TDI (1,3-Diisocyanatomethylbenzol), 2,4'-MDI (1-Isocyanato-2-(4-isocaynatophenyl)-methylbenzol), 4,4'-MDI (1,1-Methylen-bis-(4-isocyanatobenzol)),2,4-TDI (2,4-Diisocyanato-1-methylbenzol) und PPDI (1,4-Diisocyanatobenzol) oder deren Dimere umfassenden Gruppe ausgewählt ist.

7. Verfahren nach Anspruch 5, **dadurch gekennzeichnet, daß** das cycloaliphatische Diisocyanat das H₁₂MDI (1,1-Methylenbis(4-isocanatocyclohexan)) ist.

8. Verfahren nach einem der vorstehenden Ansprüche, **dadurch gekennzeichnet, daß** die Konzentration an Verknüpfungsmittel zwischen 0,1 und 30 Gew.% des TPU beträgt.

9. Verfahren nach einem der vorstehenden Ansprüche, **dadurch gekennzeichnet, daß** die Konzentration des Organosilans zwischen 0,05 und 15 Gew.% des TPU beträgt.

10. Verfahren nach einem der vorstehenden Ansprüche, **dadurch gekennzeichnet, daß** das erhaltene gepfropfte thermoplastische Polyurethan anschließend granuliert oder direkt verformt wird.

11. Nach Verformung hitzehärtbares Polyurethan, erhältlich nach dem Verfahren gemäß einem der Ansprüche 1 bis 10.

## Claims

1. method for producing a polyurethane that can be thermoset after processing (TPU) wherein:
- a mixture of thermoplastic polyurethane and binding agent which comprises at least two isocyanate functions is reacted at a temperature between 120 and 220°C to produce a reagent TPU,
- the reagent TPU mixture is then brought into contact with a hydrolysable organosilane,
- the resulting grafted TPU is then recovered,
- said hydrolysable organosilane having the general formula: 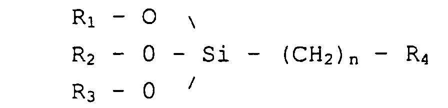
where R₁, R₂, R₃ = aliphatic alkyl, aromatic akyl; n ≥ 1;
R₄ being an organic radical capable of reacting with the said binding agent.

2. Method as claimed in claim 1, **characterised in that** R₄ is selected from the group comprising the radicals NH₂, NH, SH, OH, phenol, epoxy.

3. Method as claimed in either of claims 1 or 2, **characterised in that** the binding agent is a diisocyanate with the general formula:
O = C = N - R₅ - N = C = O
where R₅ = organic radical.

4. Method as claimed in any of the foregoing claims, **characterised in that** the organosilane is aminopropyltrimethoxysilane, formula:

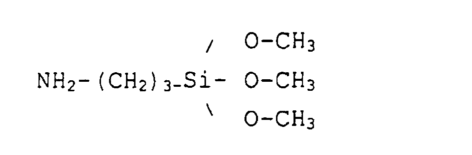

5. Method as claimed in any of the foregoing claims, **characterised in that** the diisocyanate is selected from the group comprising aromatic, cycloaliphatic and aliphatic diisocyanates and their dimers.

6. Method as claimed in claim 5, **characterised in that** the aromatic diisocyanate is selected from the group including TDI (1-3 diisocyanatomethylbenzene), 2,4'-MDI (1 isocyanato-2(4-isocyanatophenyl) methylbenzene), 4,4' MDI (1,1-methylene bis (4-isocyanatobenzene)), 2,4-TDI (2,4 diisocyanato-1-methylbenzene) and PPDI (1,4-diisocyanatobenzene) or their dimers.

7. Method as claimed in claim 5, **characterised in that** the cycloaliphatic diisocyanate is H₁₂ MDI (1,1-methylene bis (4- isocyanatocyclohexane)).

8. Method as claimed in any of the foregoing claims, **characterised in that** the concentration of cross-linking agent is between 0.1 and 30% by weight.

9. Method as claimed in any of the foregoing claims, **characterised in that** the concentration of organosilane is between 0.05 and 15% by weight of TPU.

10. Method as claimed in any of the foregoing claims, **characterised in that** the grafted thermoplastic polyurethane obtained is subsequently either granulated either immediately processed.

11. Polyurethane capable of being thermoset after processing obtainable using the method described in any of claims 1 to 10.
